# EUROPÄISCHE PATENTSCHRIFT

(11) **EP 3 704 947 B1**
(45) Veröffentlichungstag und Bekanntmachung des Hinweises auf die Patenterteilung: **12.06.2024**
(21) Anmeldenummer: 19160831.4
(22) Anmeldetag: 05.03.2019
(51) Int. Cl.: A22C 17/00, A22C 15/00

(54) **VERFAHREN ZUR LAGERUNG UND ZUM TRANSPORT VON DÖNERSPIESSEN UND HIERZU EINGESETZTE VORRICHTUNG**
METHOD FOR STORING AND TRANSPORTING DÖNER SKEWERS AND APPARATUS USED THEREFOR
PROCÉDÉ DE STOCKAGE ET DE TRANSPORT DE RÔTISSOIRES À VIANDE ET DISPOSITIF ASSOCIÉ

(43) Veröffentlichungstag der Anmeldung: 09.09.2020
(73) Patentinhaber: Polat Dönerproduktion GmbH, 41066 Mönchengladbach (DE)
(72) Erfinder: Peterkes, Christian, 41066 Mönchengladbach (DE)
(74) Vertreter: Steffan & Kiehne Patentanwälte PartG mbB

(56) Entgegenhaltungen:
- CN-A- 105 903 614
- DE-A1- 4 429 167
- FR-A- 466 604
- IE-B2- S80 699
- JP-A- H02 195 844
- US-A- 1 259 623
- US-A- 5 839 586

## Beschreibung

Die vorliegende Erfindung betrifft eine Vorrichtung zur Lagerung und zum Transport von Dönerspießen, die einen Standkörper mit einer Länge (L) umfasst, welcher an seinem oberen Ende wenigstens einen Gleithaken aufweist, mittels dessen die Vorrichtung aufhängbar und dadurch beweglich ist, und wobei der Standkörper an wenigstens zwei voneinander verschiedenen Positionen (6) und (7) seiner Länge (L) jeweils mindestens vier Streben und damit insgesamt wenigstens acht Streben aufweist, die Positionen (6) und (7) dabei einen Abstand (A) voneinander aufweisen, der mindestens 30% der Länge (L) entspricht, die jeweils mindestens vier Streben ausgehend von jeder der Positionen (6) und (7) jeweils orthogonal zur Länge (L) des Standkörpers verlaufen, wobei jede der Streben mindestens ein Aussparungselement und/oder mindestens ein Befestigungsmittel zum Einhängen/Befestigen eines Dönerspießes aufweist, eine Verwendung der Vorrichtung zur Lagerung, Kühlung und/oder zum Transport von Dönerspießen sowie entsprechende Verfahren zur Kühlung, Lagerung und zum Transport von Dönerspießen unter Einsatz der Vorrichtung.

Ein Beispiel in Bezug auf einer Lagerung und Transport Vorrichtung für Würste kann im Dokument IES80699 B2 gesehen werden.

### Stand der Technik

Der Döner Kebab (türkisch: "(sich) drehendes Grillfleisch") ist eines der bekanntesten Gerichte der türkischen Küche. Es umfasst üblicherweise aus mit Marinade gewürzten Fleischscheiben, die schichtweise auf einen senkrecht stehenden Drehspieß gesteckt und seitlich gegrillt werden ("Dönerspieß"). Ein solcher Dönerspieß besteht üblicherweise aus einer Schichtung von mehreren Lagen Fleisch. Ein fertiger Dönerspieß kann je nach Anzahl der Lagen an Fleisch zwischen 5 und 100 kg wiegen. Viele Restaurants und Imbissstände stellen die Spieße nicht selbst her, sondern beziehen sie aus industrieller Herstellung.

Je nach Größe und Umfang der industriellen Dönerproduktion des jeweiligen Herstellers dieser Spieße können täglich beispielsweise bis zu 2.500 oder mehr Dönerspieße produziert werden. Diese werden üblicherweise in Handarbeit auf Kartonhülsen oder auf Tragrohre aus Vierkantrohr geschichtet. Die Spieße müssen nach Fertigstellung tiefgefroren werden, damit sie in dieser Form bis zu ihrer Auslieferung gelagert werden können und im Anschluss gegebenenfalls in ausreichend gekühlten Transportkammern oder Containers ausgeliefert werden können. Das Tiefkühlen der Dönerspieße wird üblicherweise in Kühlkammern bzw. Tiefkühlkammern, sogenannten "Schockräumen", durchgeführt. In diesen Kammern werden die Dönerspieße mittels eines gekühlten Luftstroms schockgefroren.

Zum Zweck der vorgenannten Tiefkühlung werden die Dönerspieße üblicherweise auf Regal- oder Hängewagen in die vorgenannten Kühlkammern bzw. Tiefkühlkammern transportiert und dort gelagert. Ein Regalwagen stellt dabei ein massives Regal dar, welches auf Rollen oder Rädern montiert ist und welches für eine entsprechende Last der Dönerspieße aufgrund ihres Gewichts ausgelegt ist. Jeder Regalwagen weist eine Reihe von Regalfächern auf wie beispielsweise vier bis fünf solche Fächer, in die die Dönerspieße hineingelegt werden. Üblicherweise liegen dabei wenigstens zwei Spieße pro Regalfach des Regalwagens nebeneinander, so dass von einem Regalwagen bis zu zehn Dönerspieße aufgenommen werden können, die jeweils ein Gewicht von ca. 50 kg aufweisen. Hängewagen haben üblicherweise die gleiche Größe wie die vorgenannten Regalwagen und sind ebenfalls auf Rollen oder Rädern montiert. Sie besitzen jedoch im Gegensatz zu den Regalwagen keine Regalfächer, sondern weisen stattdessen in üblicherweise zwei übereinander befindlichen Lagen innerhalb jedes Hängewagens eine Reihe von jeweils nebeneinander angeordneten Streben wie drei bis vier Streben pro Lage des Hängewagens auf. An diese Streben jeder Lage werden die Dönerspieße mittels Haken aufgehängt. Von einem Hängewagen können üblicherweise bis zu zwölf Dönerspieße aufgenommen werden können, die jeweils ein Gewicht von ca. 50 kg aufweisen.

Diese bekannten Transport- und Lagerungsmittel und die entsprechenden bekannten Verfahren zur Überführung der hergestellten Dönerspieße zwecks Lagerung und Tiefkühlen in die vorgenannten Kühlkammern bzw. Tiefkühlkammern weisen jedoch eine Reihe von Nachteilen auf. Im Fall der eingesetzten Regalwagen können durch den Kontakt von Dönerspieß und Regalfach auf zumindest einer Seite der Dönerspieße unerwünschte Druckstellen auftreten. Zudem ist grade an diesen Positionen des im Regalfach liegenden Dönerspießes gar keine oder nur eine geringe und unregelmäßige Umströmung mit dem gekühlten Luftstrom zwecks Erzielung einer Tiefkühlung möglich. Im Fall der eingesetzten Hängewagen wird üblicherweise ebenfalls oftmals gar keine oder nur eine geringe und unregelmäßige Umströmung mit dem gekühlten Luftstrom zwecks Erzielung einer Tiefkühlung erreicht, da die die Dönerspieße oftmals zu nah beieinander hängen und dadurch in direktem Kontakt miteinander stehen, wodurch eine effiziente Umströmung verhindert wird. Sowohl die üblicherweise eingesetzten Regalwagen als auch die üblicherweise eingesetzten Hängewagen weisen zudem ein vergleichsweise hohes Eigengewicht auf, was ein unerwünschtes zumindest teilweises Einfrieren der Rollen oder Räder in den Kühlkammern bzw. Tiefkühlkammern begünstigt und zudem die Arbeit des mit dem manuellen Transport der Wagen beauftragten Mitarbeiters erschwert. Folgen dieser vorgenannten Nachteile sind insbesondere vergleichsweise lange Prozesszeiten, ein vergleichsweise hoher erforderlicher Energieaufwand für die notwendige Luftbewegung zur Erzielung der Tiefkühlung, eine für die Tiefkühlung der Dönerspieße erforderliche vergleichsweise lange Zeitdauer sowie eine schnelle Ermüdung der Mitarbeiter.

### Aufgabe

Eine Aufgabe der vorliegenden Erfindung ist es daher, ein Transport- und Lagerungsmittel und ein entsprechendes Verfahren zum Transport von Dönerspießen zur Verfügung zu stellen, die die vorgenannten Nachteile nicht aufweisen, welche durch die im Stand der Technik bekannten Transport- und Lagerungsmittel und Verfahren hervorgerufen werden. Insbesondere ist es eine Aufgabe der vorliegenden Erfindung, ein Transport- und Lagerungsmittel und ein entsprechendes Verfahren zum Transport von Dönerspießen zur Verfügung zu stellen, durch welche das Auftreten von Druckstellen an den Dönerspießen vermieden wird, eine mögliche Ermüdung des mit der Lagerung und dem Transport beauftragten Mitarbeiters möglichst minimiert wird und durch welche insbesondere der zur Tiefkühlung der Dönerspieße mittels eines gekühlten Luftstroms benötigte Energieaufwand und die für die Tiefkühlung notwendige Zeitdauer möglichst gering gehalten werden.

### Lösung

Diese Aufgabe wird gelöst durch die in den Patentansprüchen beanspruchten Gegenstände sowie die in der nachfolgenden Beschreibung beschriebenen bevorzugten Ausführungsformen dieser Gegenstände.

Ein erster Gegenstand der vorliegenden Erfindung ist eine Vorrichtung, welche zur Lagerung und zum Transport von Dönerspießen geeignet ist, wobei die Vorrichtung (1)
einen Standkörper (2) mit einer Länge (L) umfasst, welcher an seinem oberen Ende wenigstens einen Gleithaken (11) aufweist, mittels dessen die Vorrichtung (1) aufhängbar und dadurch beweglich ist,
und der Standkörper (2) so ausgestaltet ist, dass er an wenigstens zwei voneinander verschiedenen Positionen (6) und (7) seiner Länge (L) jeweils mindestens vier Streben (8) und damit insgesamt wenigstens acht Streben (8) aufweist,
   wobei die Positionen (6) und (7) einen Abstand (A) voneinander aufweisen, der mindestens 30% der Länge (L) entspricht,
   wobei sowohl die mindestens vier Streben (8) ausgehend von Position (6) des Standkörpers (2) orthogonal zur Länge (L) des Standkörpers (2) verlaufen als auch die mindestens vier Streben (8) ausgehend von Position (7) des Standkörpers (2) orthogonal zur Länge (L) des Standkörpers (2) verlaufen,
   wobei jede der Streben (8) mindestens ein Aussparungselement (9) aufweist, in welches ein Dönerspieß eingehängt werden kann, und/oder mindestens ein Befestigungsmittel (10) aufweist, mittels dessen ein Dönerspieß befestigt werden kann.

Ein weiterer Gegenstand der vorliegenden Erfindung ist eine Verwendung der vorgenannten erfindungsgemäßen Vorrichtung zur Lagerung, Kühlung und/oder zum Transport von Dönerspießen.

Ein weiterer Gegenstand der vorliegenden Erfindung ist ein Verfahren zur Kühlung von Dönerspießen umfassend wenigstens einen Schritt (1a), nämlich
(1a) Durchführen einer Kühlung von innerhalb oder an der erfindungsgemäßen Vorrichtung (1) befindlichen Dönerspießen in einer Kühlkammer.

Ein weiterer Gegenstand der vorliegenden Erfindung ist ein Verfahren zur Lagerung von Dönerspießen umfassend wenigstens einen Schritt (1b), nämlich
(1b) Durchführen einer Lagerung von innerhalb oder an der erfindungsgemäßen Vorrichtung (1) befindlichen Dönerspießen.

Ein weiterer Gegenstand der vorliegenden Erfindung ist ein Verfahren zum Transport von Dönerspießen umfassend wenigstens einen Schritt (1c), nämlich
(1c) Durchführen eines Transports von innerhalb oder an der erfindungsgemäßen Vorrichtung (1) befindlichen Dönerspießen durch manuelle Bewegung der Vorrichtung (1) von einer ersten Position A in eine zweite Position B.

Es wurde überraschend gefunden, dass es die als Transport- und Lagerungsmittel von und für Dönerspieße einsetzbare erfindungsgemäße Vorrichtung ermöglicht, den zur Tiefkühlung der Dönerspieße mittels eines gekühlten Luftstroms benötigten Energieaufwand und die zur Tiefkühlung benötigte Zeit zu minimieren. Dies wird insbesondere dadurch erzielt, dass es die erfindungsgemäße Vorrichtung ermöglicht, dass alle in/an der Vorrichtung befindlichen Dönerspieße zu jedem Zeitpunkt der Lagerung in einer Kühlkammer bzw. Tiefkühlkammer gleichmäßig von einem gekühlten Luftstrom zwecks Erzielung einer Tiefkühlung umströmt werden können. Zudem wird bei Einsatz der erfindungsgemäßen Vorrichtung die Zeitdauer minimiert, die benötigt wird, um die Dönerspieße in der Kühlkammer bzw. Tiefkühlkammer gleichmäßig tiefzukühlen, d.h. durch den gesamten Spieß. Zudem können dadurch vorteilhafterweise die Prozesszeiten verkürzt werden. Gleichzeitig ermöglicht die erfindungsgemäße Vorrichtung eine Lagerung bzw. einen Transport einer hohen Anzahl von Dönerspießen, die höher ist als bei den bekannten Mitteln wie Regal-und/oder Hängewagen, wodurch eine hohe Effizienz erzielt wird.

Ferner ermöglicht es die erfindungsgemäße Vorrichtung, dass ein zumindest teilweises Einfrieren von Rollen oder Rädern, die an den im Stand der Technik bekannten Lagerungs- und Transportmitteln wie Regalwagen und/oder Hängewagen zur Bewegung dieser Mittel befindlich sind, innerhalb eines Aufenthalts in einer Kühlkammer bzw. Tiefkühlkammer vermieden werden kann. Dies wird insbesondere dadurch erzielt, dass die erfindungsgemäße Vorrichtung mittels eines Gleithakens an ein Rohrbahnsystem aufhängbar ist und im hängenden Zustand gleitend bewegt werden kann und daher weder Rollen noch Räder zu ihrer Bewegung erforderlich sind. Zudem weist die erfindungsgemäße Vorrichtung ein vergleichsweise geringes Eigengewicht auf, insbesondere im Vergleich zu herkömmlichen als Transport- und Lagerungsmittel eingesetzten Regal- und Hängewagen. Dadurch wird zudem ein Ermüden der Mitarbeiter, die die Vorrichtung bewegen und die erfindungsgemäßen Verfahren durchführen, vermieden bzw. zumindest reduziert.

### Ausführliche Beschreibung

### Erfindungsgemäße Vorrichtung

Ein erster Gegenstand der vorliegenden Erfindung ist eine Vorrichtung (1), welche zur Lagerung und zum Transport von Dönerspießen geeignet ist. Die erfindungsgemäße Vorrichtung (1) stellt somit ein Transport- und Lagerungsmittel für Dönerspieße, insbesondere für tiefgefrorene Dönerspieße, dar.

Jede Art von Dönerfleisch kann zur Herstellung der vorgenannten Dönerspieße eingesetzt werden. Bespiele sind Hammel- oder Lammfleisch, Kalb- oder Rindfleisch und Geflügelfleisch wie Puten- oder Hähnchenfleisch. Ein entsprechender Dönerspieß kann zudem Hackfleisch enthalten.

Die erfindungsgemäße Vorrichtung umfasst einen Standkörper (2) mit einer Länge (L), welcher an seinem oberen Ende wenigstens einen Gleithaken (11) aufweist, mittels dessen die Vorrichtung (1) aufhängbar und dadurch beweglich ist. Das obere Ende des Standkörpers (2), welches den Gleithaken (11) umfasst, kann auch als Kopfelement bezeichnet werden.

Der Standkörper (2) stellt vorzugsweise ein Rohr oder eine Stange dar, vorzugsweise aus Metall oder aus einer Metalllegierung, insbesondere aus Stahl wie beispielswese Edelstahl, das/die eine Länge (L) aufweist. Der Standkörper (2) ist insbesondere in Form einer senkrecht verlaufenden Stange oder eines senkrecht verlaufenden Rohres ausgestaltet. Der "senkrechte" Verlauf meint dabei den Verlauf ausgehend vom oberen Ende, also dem Kopfelement, des Standkörpers (2), nach unten.

Mittels des wenigstens einen Gleithakens (11) kann die Vorrichtung (1) insbesondere an eine Rohrbahn aufgehängt werden und ist so im hängenden Zustand gleitend bewegbar. Solche Rohrbahnen, die üblicherweise Teil eines Rohrbahnsystems sind, sind innerhalb der Produktionsräume der Dönerspießherstellung, aber auch der Fleischindustrie und Fleischverarbeitungsindustrie im Allgemeinen, beispielsweise an der Decke montiert. Durch manuelles Ziehen oder Drücken der Vorrichtung (1) kann diese im hängenden Zustand gleitend bewegt werden, ohne dass zur Bewegung Räder und/oder Rollen erforderlich sind. Eine Bewegung kann also ohne Bodenkontakt der Vorrichtung (1) erfolgen. Da die Vorrichtung (1) im hängenden Zustand betrieben wird kann sie insbesondere im "beladenen" Zustand als Spinne, beispielsweise als "Dönerspinne" bezeichnet werden. Als Gleithaken (11) können beispielsweise entsprechende kommerziell erhältliche Haken der Firma Marchel eingesetzt werden, vorzugsweise Haken, die ein Gewicht bis zu 1250 kg tragen können. Vorzugsweise weist der Gleithaken (11) wenigstens eine Rolle auf, die wiederum wenigstens ein Kugellager umfasst. Dadurch wird eine kugelgelagerte Verschiebung bzw. Bewegung der Vorrichtung (1) mittels des Gleithakens (11) ermöglicht. Der Gleithaken (11) ist vorzugsweise aus Metall oder aus einer Metalllegierung, insbesondere aus Stahl wie beispielswese Edelstahl, gefertigt. Vorzugsweise ist der Gleithaken (11) durch Verschweißen an dem oberen Ende des Standkörpers (2) befestigt.

Es ist grundsätzlich möglich, dass der Standkörper zusätzlich an seinem unteren Ende optional ein Fußelement (3) aufweist, wobei an der Unterseite des Fußelements (3) Rollen (4) und/oder Räder (5) befestigt sind, wodurch die Vorrichtung (1) zusätzlich auch über Bodenkontakt beweglich ist. Das Fußelement (3) ist in diesem Fall am unteren Ende des Standkörpers (2) befindlich. Innerhalb der Vorrichtung (1) kann das Fußelement (3) vorzugsweise orthogonal zur Länge (L) des vorzugsweise senkrecht verlaufenden Standkörpers (2) angeordnet sein. Das Fußelement (3) kann aus Metall oder aus einer Metalllegierung, insbesondere aus Stahl wie beispielswese Edelstahl, gefertigt sein. Das Fußelement (3) fungiert vorzugsweise als beweglicher Ständer der Vorrichtung (1) und hat Bodenkontakt. An der Unterseite des Fußelements (3) sind Rollen (4) und/oder Räder (5) befestigt, die Bodenkontakt aufweisen und mittels der die Vorrichtung (1) beweglich ist. Wie vorstehend ausgeführt ist es jedoch gerade einer der Vorteile der erfindungsgemäßen Vorrichtung (1), dass diese keine Räder und/oder Rollen zur Bewegung benötigt. Vorzugsweise weist die erfindungsgemäße Vorrichtung (1) daher kein solches Fußelement (3) auf. Insbesondere weist die erfindungsgemäße Vorrichtung (1) keine Räder und keine Rollen auf.

Der Standkörper (2) weist eine Länge (L) auf. Diese liegt vorzugsweise in einem Bereich von 1,70 m bis 2,10 m, besonders bevorzugt in einem Bereich von 1,80 m bis 2,05 m, besonders bevorzugt in einem Bereich von 1,90 m bis 2,00 m.

Der Standkörper (2) ist so ausgestaltet, dass er an wenigstens zwei voneinander verschiedenen Positionen (6) und (7) seiner Länge (L) jeweils mindestens vier Streben (8) und damit insgesamt wenigstens acht Streben (8) aufweist. Die Positionen (6) und (7) sind übereinander angeordnet, bezogen auf die Länge (L) des Standkörpers (2).

Die Positionen (6) und (7) weisen einen Abstand (A) voneinander auf, der mindestens 30% der Länge (L) entspricht. Vorzugsweise weisen die innerhalb der Länge (L) des Standkörpers (2) befindlichen Positionen (6) und (7) einen Abstand (A) voneinander auf, der mindestens 35%, insbesondere mindestens 40%, der Länge (L) entspricht. Vorzugsweise weisen die innerhalb der Länge (L) des Standkörpers (2) befindlichen Positionen (6) und (7) einen Abstand (A) voneinander auf, der höchstens 60%, besonders bevorzugt höchstens 55%, insbesondere höchstens 50%, der Länge (L) entspricht.

Jede der Positionen (6) und (7) der Länge (L) des Standkörpers (2) stellt einen Ausgangspunkt für jeweils mindestens vier Streben (8) dar. Der Standkörper (2) weist dadurch vorzugsweise wenigstens zwei Lagen von Streben (8) auf: die erste Lage an Streben (8) befindet sich auf Höhe der Position (6) der Länge (L) des Standkörpers (2) und die zweite Lage an Streben (8) befindet sich auf Höhe der Position (7) der Länge (L) des Standkörpers (2).

Die Streben (8) stellen insbesondere Stützen dar und sind insbesondere in Form von Balken und/oder Stangen ausgestaltet. Die Streben (8) verlaufen jeweils ausgehend von jeder der Positionen (6) und (7) orthogonal zur Länge (L) des Standkörpers (2) und verlaufen vorzugsweise - wiederum ausgehend von den Positionen (6) und (7) - vom Standkörper (2) weg. Die Streben (8) sind vorzugsweise aus Metall oder aus einer Metalllegierung, insbesondere aus Stahl wie beispielswese Edelstahl, gefertigt.

Sowohl die mindestens vier Streben (8) ausgehend von Position (6) des Standkörpers (2) - die die erste Lage an Streben (8) darstellen - als auch die mindestens vier Streben (8) ausgehend von Position (7) des Standkörpers (2) - die die zweite Lage an Streben (8) darstellen - verlaufen orthogonal zur Länge (L) des Standkörpers (2).

Vorzugsweise verlaufen sowohl die mindestens vier Streben (8) ausgehend von Position (6) des Standkörpers (2) als auch die mindestens vier Streben (8) ausgehend von Position (7) des Standkörpers (2) zudem jeweils orthogonal zueinander. Dies gilt insbesondere dann, wenn der Standkörper (2) an jeder der Positionen (6) und (7) jeweils genau vier Streben (8) aufweist.

Vorzugsweise weisen alle Streben (8) innerhalb einer der vorstehend genannten mindestens zwei Lagen, d.h. innerhalb der ersten und der zweiten Lage, die gleiche Länge (S) auf. Insbesondere weisen alle Streben (8) der Vorrichtung (1) die gleiche Länge (S) auf.

Die Streben (8) weisen vorzugsweise jeweils eine Länge (S) auf, die in einem Bereich von 20 cm bis 55 cm, besonders bevorzugt in einem Bereich von 25 cm bis 45 cm, besonders bevorzugt in einem Bereich von 30 cm bis 45 cm, liegt. Die Berechnung erfolgt dabei ausgehend von der Position (6) oder (7) des Standkörpers (2) bis zum Ende der Strebe (8).

Die Streben (8) verlaufen vorzugsweise ausgehend von jeder der Positionen (6) und (7) jeweils in einer Ebene orthogonal zur Länge (L) des Standkörpers (2). Mit anderen Worten verlaufen vorzugsweise alle Streben (8) ausgehend von Position (6) jeweils in einer Ebene orthogonal zur Länge (L) des Standkörpers (2) und es verlaufen vorzugsweise alle Streben (8) ausgehend von Position (7) jeweils in einer Ebene orthogonal zur Länge (L) des Standkörpers (2).

Wie vorstehend ausgeführt ist der Standkörper (2) so ausgestaltet, dass er an den wenigstens zwei voneinander verschiedenen Positionen (6) und (7) seiner Länge (L) jeweils mindestens vier Streben (8) aufweist. Somit weist der Standkörper (2) vorzugsweise insgesamt mindestens acht Streben (8) auf, nämlich mindestens vier Streben (8) ausgehend von jeder der Positionen (6) und (7) des Standkörpers (2).

Besonders bevorzugt weist der Standkörper (2) an jeder der wenigstens zwei voneinander verschiedenen Positionen (6) und (7) seiner Länge (L) mindestens sechs, insbesondere mindestens acht, Streben (8) auf. Somit weist der Standkörper (2) vorzugsweise insgesamt mindestens zwölf Streben (8) auf (mindestens sechs Streben (8) ausgehend von jeder der Positionen (6) und (7) des Standkörpers (2)) und insbesondere insgesamt mindestens sechzehn Streben (8) auf (mindestens acht Streben (8) ausgehend von jeder der Positionen (6) und (7) des Standkörpers (2)).

Die Streben (8) sind vorzugsweise durch Verschweißen am Standkörper (2) befestigt.

Sind jeweils genau vier Streben (8) ausgehend von Position (6) und jeweils genau vier Streben (8) ausgehend von Position (7) vorhanden, so sind diese Streben (8) vorzugsweise jeweils in Form eines Kreuzes in jeder der beiden Lagen angeordnet. Die jeweils benachbarten Streben (8) einer Lage weisen dann einen 90°-Winkel zueinander auf.

Sind jeweils genau acht Streben (8) ausgehend von Position (6) und jeweils genau acht Streben (8) ausgehend von Position (7) vorhanden, so sind diese Streben (8) vorzugsweise jeweils in Form eines Sterns in jeder der beiden Lagen angeordnet. Die jeweils benachbarten Streben (8) einer Lage weisen dann einen 45°-Winkel zueinander auf.

Jede der Streben (8) weist mindestens ein Aussparungselement (9) auf, in welches ein Dönerspieß eingehängt werden kann, und/oder weist mindestens ein Befestigungsmittel (10) auf, mittels dessen ein Dönerspieß an der Vorrichtung (1) befestigt werden kann. Vorzugsweise weist jede der Streben mindestens ein Aussparungselement (9) auf, in welches ein Dönerspieß eingehängt werden kann. Das Einhängen erfolgt dabei vorzugsweise mittels der Kartonhülse oder des Tragrohrs beispielsweise aus Vierkantrohr des Dönerspießes. Vorzugsweise weist der jeweils eingesetzte Spieß dabei an seinem oberen Ende, welches in das Aussparungselement (9) eingehängt wird, einen größeren Durchmesser auf als der Rest des Spießes, um ein Einhängen zu ermöglichen.

Das mindestens eine Aussparungselement (9) und/oder das mindestens eine Befestigungsmittel (10) sind vorzugsweise durch Verschweißen mit der oder den Streben (8) fest verbunden. Aussparungselement (9) und/oder Befestigungsmittel (10) sind vorzugsweise jeweils aus Metall oder aus einer Metalllegierung, insbesondere aus Stahl wie beispielswese Edelstahl, gefertigt.

Vorzugsweise weist jede der Streben (8) mindestens ein Aussparungselement (9) auf. Vorzugsweise ist das Aussparungselement (9) so ausgestaltet, dass es eine ebene Grundfläche aufweist, die eine Aussparung aufweist, in die der Dönerspieß eingehängt werden kann. Um ein Herausrutschen des Spießes aus der Aussparung zu verhindern, weist jedes Aussparungselement (9) vorzugsweise an der äußeren Seite, die die Aussparung beinhaltet, eine seitliche Erhöhung auf. Vorzugsweise weist das Aussparungselement (9) eine Dicke im Bereich von 3 bis 10 mm, besonders bevorzugt von 3 bis 8 mm, insbesondere von 4 bis 6 mm auf. Vorzugsweise weist die seitliche Erhöhung eine Höhe im Bereich von 5 bis 20 mm, besonders bevorzugt von 7,5 bis 17,5 mm, insbesondere von 10 bis 15 mm, auf.

Das mindestens eine Aussparungselement (9) und/oder das mindestens eine Befestigungsmittel (10) ist/sind vorzugsweise am äußeren Ende jeder Strebe (8) befindlich. Der Begriff des "äußeren Endes" bezieht sich dabei auf die Blickrichtung ausgehend von Position (6) bzw. (7) des Standkörpers (2). Das mindestens eine Aussparungselement (9) und/oder das mindestens eine Befestigungsmittel (10) ist/sind somit vorzugsweise weitest möglich vom Standkörper (2) entfernt.

Vorzugsweise weist jede der Streben (8) nicht nur ein Aussparungselement (9) und/oder ein Befestigungsmittel (10) auf, sondern jede der Streben (8) weist mindestens zwei, vorzugsweise genau zwei, Aussparungselemente (9) und/oder mindestens zwei, vorzugsweise genau zwei, Befestigungsmittel (10) auf. Vorzugsweise sind die beiden Aussparungselemente (9) jeder der Streben (8) in diesem Fall orthogonal zueinander an der jeweiligen Strebe (8) angeordnet. Vorzugsweise befindet sich eines der Aussparungselemente (9) jeder Strebe (8) am äußeren Ende der Strebe (8). Das zweite der Aussparungselemente (9) jeder Strebe (8) ist hingegen an einer Position der Strebe (8) angebracht, die etwa, vorzugsweise genau, zwischen dem ersten am äußeren Ende der Strebe (8) befindlichen Aussparungselement (9) und der Position (6) bzw. (7) des Standkörpers (2) befindlich ist. In Bezug auf das erste Aussparungselement (9) der Strebe (8) ist das zweite Aussparungselement (9) jedoch vorzugsweise orthogonal dazu angeordnet. Die Aussparung des zweiten Aussparungselements (9) zeigt dabei nicht in Richtung des äußeren Endes der Strebe (8) sondern um 90° verdreht dazu.

Insbesondere durch die geregelten Abstände der Dönerspieße im Hängezustand innerhalb der Vorrichtung (1) zueinander, kann jeder der Spieße vorteilhafterweise gleichermaßen mit Luft umströmt werden, was insbesondere bei der Kühlung mittels eines gekühlten Luftstroms (beispielsweise von 100 m³/h) eine effizientere Kühlung ermöglicht. Dies gilt auch dann und insbesondere dann, wenn die Vorrichtung (1) sechzehn Streben (8) aufweist, von denen jede zwei Aussparungselemente (9) und/oder zwei Befestigungsmittel (10) umfasst.

Vorzugsweise umfasst die Vorrichtung (1) ein oder mehrere Dönerspieße, der oder die in wenigstens ein Aussparungselement (9) eingehängt ist/sind und/oder der oder die mittels wenigstens eines Befestigungsmittels (10) an der Vorrichtung befestigt ist/sind. Es können alle üblichen Gewichtsklassen an Dönerspießen an der Vorrichtung (1) aufgehängt werden, so dass die Vorrichtung (1) universell einsetzbar ist.

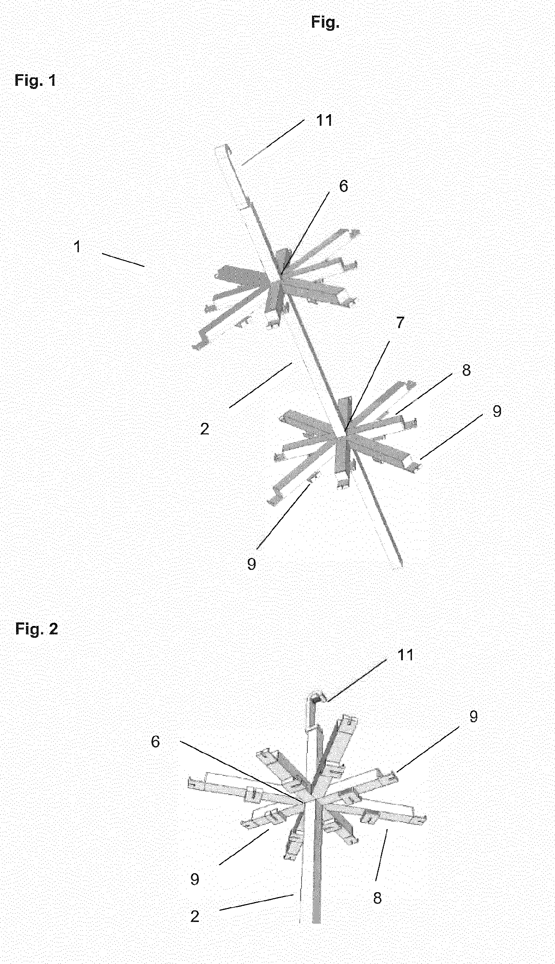

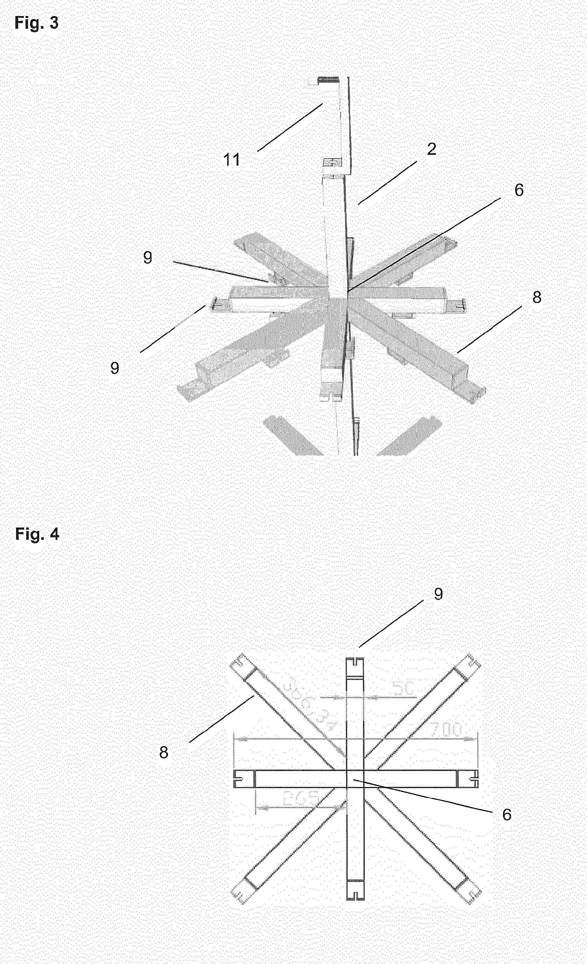

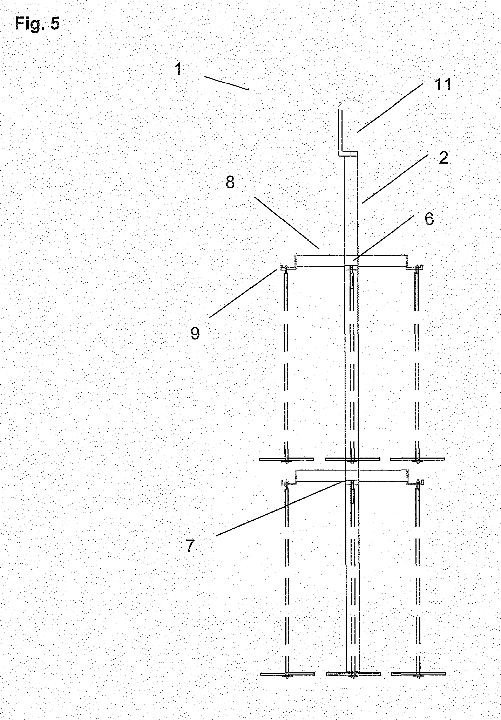

**Fig. 1, Fig. 2** und **Fig. 3** zeigen jeweils eine schematische 3D-Draufsicht einer beispielhaften Ausgestaltung der Vorrichtung (1) aus unterschiedlichen Perspektiven. Die Vorrichtung (1) weist einen Standkörper (2) mit einer Länge (L) auf, welcher an seinem oberen Ende wenigstens einen Gleithaken (11) aufweist, mittels dessen die Vorrichtung (1) aufhängbar und dadurch beweglich ist. Der Standkörper (2) ist so ausgestaltet ist, dass er an wenigstens zwei voneinander verschiedenen Positionen (6) und (7) seiner Länge (L) jeweils acht Streben (8) und damit insgesamt sechzehn Streben (8) aufweist, die jeweils sternförmig angeordnet sind. Die acht Streben (8) ausgehend von Position (6) des Standkörpers (2) sind orthogonal zur Länge (L) des Standkörpers (2) positioniert. Das gleiche gilt zudem für die acht Streben (8) ausgehend von Position (7) des Standkörpers (2). Jede der Streben (8) weist zwei Aussparungselemente (9) auf, in welche jeweils ein Dönerspieß eingehängt werden kann. In **Fig. 2** und **Fig. 3** ist im Gegensatz zur **Fig**. **1** aus Gründen der Übersichtlichkeit nur eine Lage an Streben (8) gezeigt, nämlich nur betreffend die Position (6).

**Fig**. **5** stellt eine seitliche 2D-Darstellung der Vorrichtung (1) gemäß **Fig**. **1** dar. Aus Gründen der Übersichtlichkeit sind insgesamt nur vier Streben (8) mit jeweils einem Aussparungselement (9) abgebildet.

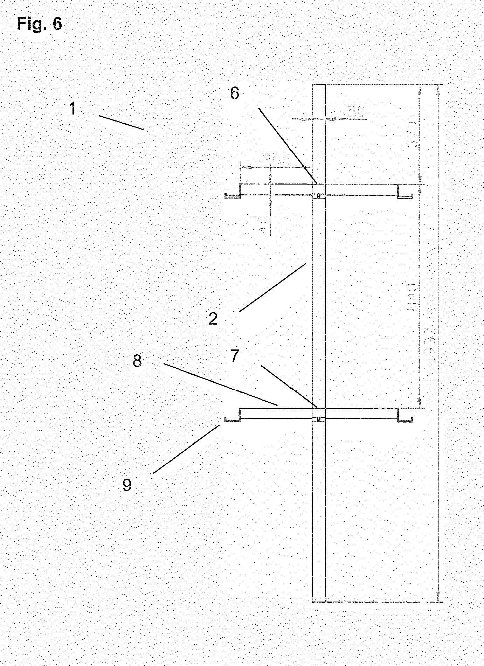

**Fig. 4** und **Fig. 6** stellen jeweils technische Zeichnungen einer beispielhaften Ausgestaltung der erfindungsgemäßen Vorrichtung (1) bzw. von Teilen davon dar. In **Fig. 6** ist der Gleithaken (11) aus Gründen der Übersichtlichkeit nicht abgebildet.

### Erfindungsgemäße Verwendung

Ein weiterer Gegenstand der vorliegenden Erfindung ist eine Verwendung der vorgenannten erfindungsgemäßen Vorrichtung (1) zur Lagerung, Kühlung und/oder zum Transport von Dönerspießen.

Alle im Zusammenhang mit der erfindungsgemäßen Vorrichtung (1) hierin zuvor beschriebenen bevorzugten Ausführungsformen sind auch bevorzugte Ausführungsformen hinsichtlich der erfindungsgemäßen Verwendung.

### Erfindungsgemäßes Verfahren zur Kühlung von Dönerspießen

Ein weiterer Gegenstand der vorliegenden Erfindung ist ein Verfahren zur Kühlung von Dönerspießen umfassend wenigstens einen Schritt (1a), nämlich
(1a) Durchführen einer Kühlung von innerhalb oder an der erfindungsgemäßen Vorrichtung (1) befindlichen Dönerspießen in einer Kühlkammer.

Alle im Zusammenhang mit der erfindungsgemäßen Vorrichtung (1) und ihrer Verwendung hierin zuvor beschriebenen bevorzugten Ausführungsformen sind auch bevorzugte Ausführungsformen hinsichtlich des erfindungsgemäßen Verfahrens zur Kühlung von Dönerspießen. Der Begriff "befindlich" meint, dabei, dass der oder die Dönerspieße in das wenigstens eine Aussparungselement (9) jeder Strebe (8) eingehängt sind und/oder mittels des wenigstens einen Befestigungsmittels (10) an jeder Strebe (8) befestigt ist/sind.

Vorzugsweise wird die Kühlung gemäß Schritt (1a) in einer Tiefkühlkammer bei einer Temperatur von ≤ -15°C durchgeführt.

Vorzugsweise hängt die Vorrichtung (1) während der Durchführung der Kühlung über ihren Gleithaken (11) an einer in der Kühlkammer befindlichen Rohrbahn, die vorzugsweise Teil eines Rohrbahnsystems ist.

### Erfindungsgemäßes Verfahren zur Lagerung von Dönerspießen

Ein weiterer Gegenstand der vorliegenden Erfindung ist ein Verfahren zur Lagerung von Dönerspießen umfassend wenigstens einen Schritt (1b), nämlich
(1b) Durchführen einer Lagerung von innerhalb oder an der erfindungsgemäßen Vorrichtung (1) befindlichen Dönerspießen.

Alle im Zusammenhang mit der erfindungsgemäßen Vorrichtung (1) und ihrer Verwendung sowie dem erfindungsgemäßen Verfahren zur Kühlung von Dönerspießen hierin zuvor beschriebenen bevorzugten Ausführungsformen sind auch bevorzugte Ausführungsformen hinsichtlich des erfindungsgemäßen Verfahrens zur Lagerung von Dönerspießen. Der Begriff "befindlich" meint, dabei, dass der oder die Dönerspieße in das wenigstens eine Aussparungselement (9) jeder Strebe (8) eingehängt sind und/oder mittels des wenigstens einen Befestigungsmittels (10) an jeder Strebe (8) befestigt ist/sind.

Vorzugsweise wird die Lagerung gemäß Schritt (1b) in einer Kühlkammer, vorzugsweise in einer Tiefkühlkammer, durchgeführt, vorzugsweise bei einer Temperatur von ≤ -15°C.

Vorzugsweise hängt die Vorrichtung (1) während der Durchführung der Lagerung über ihren Gleithaken (11) an einer vorzugsweise in einer Kühlkammer befindlichen Rohrbahn, die vorzugsweise Teil eines Rohrbahnsystems ist.

Die Lagerung gemäß Schritt (1b) erfolgt dabei vorzugsweise über eine Zeitdauer von wenigstens 10 Stunden, besonders bevorzugt wenigstens 15 Stunden, und kann bis zu 12 Monaten erfolgen. Nach wenigstens 10 bis 15 Stunden ist bei Annahme einer Mindesteinfriergeschwindigkeit von 1cm/h üblicherweise eine ausreichende Tiefkühlung der Dönerspieße erreicht. Der Maximalwert von 1 Jahr ergibt sich durch die lebensmitteltechnisch relevante Mindesthaltbarkeitszeit.

### Erfindungsgemäßes Verfahren zum Transport von Dönerspießen

Ein weiterer Gegenstand der vorliegenden Erfindung ist ein Verfahren zum Transport von Dönerspießen umfassend wenigstens einen Schritt (1c), nämlich
(1c) Durchführen eines Transports von innerhalb oder an der erfindungsgemäßen Vorrichtung (1) befindlichen Dönerspießen durch manuelle Bewegung der Vorrichtung (1) von einer ersten Position A in eine zweite Position B.

Alle im Zusammenhang mit der erfindungsgemäßen Vorrichtung (1) und ihrer Verwendung sowie den erfindungsgemäßen Verfahren zur Kühlung und zur Lagerung von Dönerspießen hierin zuvor beschriebenen bevorzugten Ausführungsformen sind auch bevorzugte Ausführungsformen hinsichtlich des erfindungsgemäßen Verfahrens zum Transport von Dönerspießen. Der Begriff "befindlich" meint, dabei, dass der oder die Dönerspieße in das wenigstens eine Aussparungselement (9) jeder Strebe (8) eingehängt sind und/oder mittels des wenigstens einen Befestigungsmittels (10) an jeder Strebe (8) befestigt ist/sind.

Vorzugsweise hängt die Vorrichtung (1) während der Durchführung des Transports über ihren Gleithaken (11) an einer Rohrbahn, die vorzugsweise Teil eines Rohrbahnsystems ist.

Die Bewegung gemäß Schritt (1c) erfolgt dabei vorzugsweise durch Ziehen oder Drücken der erfindungsgemäßen Vorrichtung (1), die mittels des Gleithakens (11) an in den Räumen der industriellen Herstellung verlaufenden Rohrbahnen aufgehängt ist. Die erste Position A stellt einen Ort A dar, an dem sich die Vorrichtung vor dem Zeitpunkt des Transports befindet. Die zweite Position B stellt einen Ort B dar, an dem sich die Vorrichtung nach Durchführung des Transports befindet.

Vorzugsweise erfolgt der Transport gemäß Schritt (1c)
(i) nach Herstellung des Dönerspießes von dem Ort der Herstellung als Position A in eine Kühlkammer, vorzugsweise Tiefkühlkammer, als Position B, oder der Transport gemäß Schritt (1c) erfolgt
(ii) nach einer Kühlung, vorzugsweise nach einer Tiefkühlung, des Dönerspießes in einer Kühlkammer, vorzugsweise in einer Tiefkühlkammer, als Position A an einen Ort außerhalb der Kühlkammer, vorzugsweise außerhalb der Tiefkühlkammer, als Position B.

## Patentansprüche

1. Eine Vorrichtung, welche zur Lagerung und zum Transport von Dönerspießen geeignet ist, wobei die Vorrichtung (1)
einen Standkörper (2) mit einer Länge (L) umfasst, welcher an seinem oberen Ende wenigstens einen Gleithaken (11) aufweist, mittels dessen die Vorrichtung (1) aufhängbar und dadurch beweglich ist,
und der Standkörper (2) so ausgestaltet ist, dass er an wenigstens zwei voneinander verschiedenen Positionen (6) und (7) seiner Länge (L) jeweils mindestens vier Streben (8) und damit insgesamt wenigstens acht Streben (8) aufweist, die ausgehend von den Positionen (6) und (7) vom Standkörper (2) weglaufen,
wobei die Positionen (6) und (7) einen Abstand (A) voneinander aufweisen, der mindestens 30% der Länge (L) entspricht.
wobei sowohl die mindestens vier Streben (8) ausgehend von Position (6) des Standkörpers (2) orthogonal zur Länge (L) des Standkörpers (2) verlaufen als auch die mindestens vier Streben (8) ausgehend von Position (7) des Standkörpers (2) orthogonal zur Länge (L) des Standkörpers (2) verlaufen,
wobei jede der Streben (8) mindestens ein Aussparungselement (9) aufweist, in welches ein Dönerspieß eingehängt werden kann, und/oder mindestens ein Befestigungsmittel (10) aufweist, mittels dessen ein Dönerspieß befestigt werden kann.

2. Die Vorrichtung gemäß Anspruch 1, **dadurch gekennzeichnet, dass** die Positionen (6) und (7) einen Abstand (A) voneinander aufweisen, der höchstens 60% der Länge (L) entspricht.

3. Die Vorrichtung gemäß Anspruch 1 oder 2, **dadurch gekennzeichnet, dass** der Standkörper (2) an jeder der wenigstens zwei voneinander verschiedenen Positionen (6) und (7) seiner Länge (L) mindestens acht Streben (8) aufweist.

4. Die Vorrichtung gemäß einem der vorstehenden Ansprüche, **dadurch gekennzeichnet, dass** die Streben (8) ausgehend von jeder der Positionen (6) und (7) des Standkörpers (2) jeweils in einer Ebene verlaufen.

5. Die Vorrichtung gemäß einem der vorstehenden Ansprüche, **dadurch gekennzeichnet, dass** jede der Streben (8) mindestens zwei Aussparungselemente (9) und/oder mindestens zwei Befestigungsmittel (10) aufweist.

6. Die Vorrichtung gemäß Anspruch 5, **dadurch gekennzeichnet, dass** sich das erste der Aussparungselemente (9) bzw. Befestigungsmittel (10) jeder Strebe (8) ausgehend von Position (6) bzw. (7) am äußeren Ende der Strebe (8) befindet, und das zweite der Aussparungselemente (9) bzw. Befestigungsmittel (10) jeder Strebe (8) an einer Position der Strebe (8) angebracht ist, die zwischen dem vorgenannten ersten der Aussparungselemente (9) bzw. der Befestigungsmittel (10) und der Position (6) bzw. (7) des Standkörpers (2) befindlich ist, wobei das zweite Aussparungselement (9) bzw. das zweite Befestigungsmittel (10) in Bezug auf das erste Aussparungselement (9) der Strebe (8) orthogonal dazu angeordnet ist.

7. Die Vorrichtung gemäß einem der vorstehenden Ansprüche, **dadurch gekennzeichnet, dass** die Vorrichtung (1) keine Rollen und/oder Räder aufweist.

8. Die Vorrichtung gemäß einem der vorstehenden Ansprüche, **dadurch gekennzeichnet, dass** die Vorrichtung (1) ein oder mehrere Dönerspieße umfasst, der oder die in wenigstens ein Aussparungselement (9) eingehängt ist/sind und/oder der oder die mittels wenigstens eines Befestigungsmittels (10) an der Vorrichtung befestigt ist/sind.

9. Eine Verwendung der Vorrichtung (1) gemäß einem der vorstehenden Ansprüche zur Lagerung, Kühlung und/oder zum Transport von Dönerspießen.

10. Ein Verfahren zum Kühlen von Dönerspießen umfassend wenigstens einen Schritt (1a), nämlich
(1a) Durchführen einer Kühlung von innerhalb oder an der Vorrichtung (1) gemäß einem der Ansprüche 1 bis 8 befindlichen Dönerspießen in einer Kühlkammer.

11. Das Verfahren zum Kühlen von Dönerspießen gemäß Anspruch 10, **dadurch gekennzeichnet, dass** die Kühlung gemäß Schritt (1a) in einer Tiefkühlkammer bei einer Temperatur von ≤ -15°C durchgeführt wird.

12. Ein Verfahren zur Lagerung von Dönerspießen umfassend wenigstens einen Schritt (1b), nämlich
(1b) Durchführen einer Lagerung von innerhalb oder an der Vorrichtung (1) gemäß einem der Ansprüche 1 bis 8 befindlichen Dönerspießen.

13. Das Verfahren zur Lagerung von Dönerspießen gemäß Anspruch 12, **dadurch gekennzeichnet, dass** die Lagerung gemäß Schritt (1b) in einer Kühlkammer, vorzugsweise in einer Tiefkühlkammer, durchgeführt wird, vorzugsweise bei einer Temperatur von ≤ -15°C.

14. Ein Verfahren zum Transport von Dönerspießen umfassend wenigstens einen Schritt (1c), nämlich
(1c) Durchführen eines Transports von innerhalb oder an der Vorrichtung (1) gemäß einem der Ansprüche 1 bis 8 befindlichen Dönerspießen durch manuelle Bewegung der Vorrichtung (1) von einer ersten Position A in eine zweite Position B.

15. Das Verfahren zum Transport von Dönerspießen gemäß Anspruch 14, **dadurch gekennzeichnet, dass** der Transport gemäß Schritt (1c)
(i) nach Herstellung des Dönerspießes von dem Ort der Herstellung als Position A in eine Kühlkammer, vorzugsweise Tiefkühlkammer, als Position B erfolgt, oder dass der Transport gemäß Schritt (1c),
(ii) nach einer Kühlung, vorzugsweise nach einer Tiefkühlung, des Dönerspießes in einer Kühlkammer, vorzugsweise in einer Tiefkühlkammer, als Position A an einen Ort außerhalb der Kühlkammer, vorzugsweise außerhalb der Tiefkühlkammer, als Position B erfolgt.

## Claims

1. A device suitable for storing and transporting kebab skewers, the device (1)
comprising a stand body (2) with a length (L), which has at least one sliding hook (11) at its upper end, by means of which the device (1) can be suspended and is thus movable,
and the stand body (2) being configured in such a way that it has at least four struts (8) each at at least two different positions (6) and (7) along its length (L), and thus at least eight struts (8) in total, which run away from the stand body (2) starting from the positions (6) and (7),
wherein the positions (6) and (7) have a distance (A) from each other which corresponds to at least 30% of the length (L),
wherein both the at least four struts (8) extend orthogonally to the length (L) of the upright body (2) starting from position (6) of the upright body (2) and the at least four struts (8) extend orthogonally to the length (L) of the upright body (2) starting from position (7) of the upright body (2),
wherein each of the struts (8) has at least one recess element (9), into which a kebab skewer can be suspended, and/or has at least one fastening means (10), by means of which a kebab skewer can be fastened.

2. The device according to claim 1, **characterized in that** the positions (6) and (7) have a distance (A) from each other which corresponds to at most 60% of the length (L).

3. The device according to claim 1 or 2, **characterized in that** the stand body (2) has at least eight struts (8) at each of the at least two different positions (6) and (7) of its length (L).

4. The device according to one of the preceding claims, **characterized in that** the struts (8) each extend in a plane starting from each of the positions (6) and (7) of the stand body (2), respectively.

5. The device according to any one of the preceding claims,
**characterized in that** each of the struts (8) has at least two recess elements (9) and/or at least two fastening means (10).

6. The device according to claim 5, **characterized in that** the first of the recess elements (9) or fastening means (10) of each strut (8) is located at the outer end of the strut (8), starting from position (6) or (7), and the second of the recess elements (9) or fastening means (10) of each strut (8) is attached to a position of the strut (8) which is located between the aforementioned first of the recess elements (9) or fastening means (10) and the position (6) or (7) of the stand body (2), wherein the second recess element (9) or the second fastening means (10) is arranged orthogonally with respect to the first recess element (9) of the strut (8).

7. The device according to any one of the preceding claims,
**characterized in that** the device (1) has no rollers and/or wheels.

8. The device according to any one of the preceding claims,
**characterized in that** the device (1) comprises one or more kebab skewers which is/are suspended in at least one recess element (9) and/or which is/are fastened to the device by means of at least one fastening means (10).

9. A use of the device (1) according to any one of the preceding claims for storing, cooling and/or transporting kebab skewers.

10. A method for cooling kebab skewers comprising at least one step (1a), namely
(1a) performing cooling of kebab skewers located inside or on the device (1) according to any one of claims 1 to 8 in a cooling chamber.

11. The method for cooling kebab skewers according to claim 10,
**characterized in that** the cooling according to step (1a) is carried out in a deep-freezing chamber at a temperature of ≤ -15 °C.

12. A method for storing kebab skewers, comprising at least one step (1b), namely
(1b) performing storage of kebab skewers located inside or on the device (1) according to any one of claims 1 to 8.

13. The method for storing kebab skewers according to claim 12,
**characterized in that** the storage according to step (1b) is carried out in a cooling chamber, preferably in a deep-freezing chamber, preferably at a temperature of ≤ -15 °C.

14. A method for transporting kebab skewers, comprising at least one step (1c), namely
(1c) performing transportation of kebab skewers located inside or on the device (1) according to any one of claims 1 to 8, by manually moving the device (1) from a first position A to a second position B.

15. The method for transporting kebab skewers according to claim 14,
**characterized in that** the transport according to step (1c)
(i) is performed after production of the kebab skewer, from the point of production as position A into a cooling chamber, preferably a deep-freezing chamber, as position B, or that the transport according to step (1c)
(ii) is performed after cooling, preferably after deep-freezing, the kebab skewer in a cooling chamber, preferably in a deep-freezing chamber, as position A to a location outside the cooling chamber, preferably outside the deep-freezing chamber, as position B.

## Revendications

1. Dispositif adapté au stockage et au transport de brochettes de kebab, le dispositif (1)
comprenant un corps de support (2) d'une longueur (L), qui présente à son extrémité supérieure au moins un crochet coulissant (11), au moyen duquel le dispositif (1) peut être suspendu et donc déplacé,
et le corps de support (2) étant configuré de telle sorte qu'il présente, en au moins deux positions (6) et (7) différentes l'une de l'autre de sa longueur (L), respectivement au moins quatre entretoises (8), et donc au total au moins huit entretoises (8) qui s'éloignent du corps de support (2) à partir des positions (6) et (7),
les positions (6) et (7) présentant une distance (A) l'une de l'autre qui correspond à au moins 30% de la longueur (L),
dans lequel les au moins quatre entretoises (8) s'étendent à partir de la position (6) du corps de support (2) orthogonalement à la longueur (L) du corps de support (2) aussi bien que les au moins quatre entretoises (8) s'étendent à partir de la position (7) du corps de support (2) orthogonalement à la longueur (L) du corps de support (2),
chacune des entretoises (8) présentant au moins un élément d'évidement (9) dans lequel une brochette de kebab peut être accrochée, et/ou présentant au moins un moyen de fixation (10) au moyen duquel une brochette de kebab peut être fixée.

2. Dispositif selon la revendication 1, **caractérisé en ce que** les positions (6) et (7) présentent une distance (A) l'une de l'autre qui correspond au maximum à 60% de la longueur (L).

3. Dispositif selon la revendication 1 ou 2, **caractérisé en ce que** le corps de support (2) présente au moins huit entretoises (8) à chacune des au moins deux positions (6) et (7) différentes l'une de l'autre de sa longueur (L).

4. Dispositif selon l'une quelconque des revendications précédentes, **caractérisé en ce que** les entretoises (8) s'étendent respectivement dans un plan à partir de chacune des positions (6) et (7) du corps de support (2).

5. Dispositif selon l'une quelconque des revendications précédentes, **caractérisé en ce que** chacune des entretoises (8) comporte au moins deux éléments d'évidement (9) et/ou au moins deux moyens de fixation (10).

6. Dispositif selon la revendication 5, **caractérisé en ce que** le premier des éléments d'évidement (9) ou des moyens de fixation (10) de chaque entretoise (8) est situé à l'extrémité extérieure de l'entretoise (8) à partir de la position (6) ou (7), et le deuxième des éléments d'évidement (9) ou des moyens de fixation (10) de chaque entretoise (8) est fixé à une position de l'entretoise (8) qui est située entre le premier des éléments d'évidement (9) ou des moyens de fixation (10) susmentionnés et la position (6) ou (7) du corps de support (2), le deuxième élément d'évidement (9) ou le deuxième moyen de fixation (10) étant disposé orthogonalement par rapport au premier élément d'évidement (9) de l'entretoise (8).

7. Dispositif selon l'une quelconque des revendications précédentes, **caractérisé en ce que** le dispositif (1) ne présente pas de roulettes et/ou de roues.

8. Dispositif selon l'une quelconque des revendications précédentes, **caractérisé en ce que** le dispositif (1) comprend une ou plusieurs brochettes à kebab accrochée(s) dans au moins un élément d'évidement (9) et/ou fixée(s) au dispositif par au moins un moyen de fixation (10).

9. Utilisation du dispositif (1) selon l'une quelconque des revendications précédentes pour le stockage, la réfrigération et/ou le transport de brochettes de kebab.

10. Procédé pour refroidir des brochettes de kebab, comprenant au moins une étape (1a), à savoir
(1a) réaliser un refroidissement de brochettes de kebab situées à l'intérieur ou sur le dispositif (1) selon l'une quelconque des revendications 1 à 8, dans une chambre de refroidissement.

11. Procédé pour refroidir des brochettes de kebab selon la revendication 10, **caractérisé en ce que** le refroidissement selon l'étape (1 a) est effectuée dans une chambre de congélation à une température de ≤ -15 °C.

12. Procédé pour stocker des brochettes de kebab, comprenant au moins une étape (1b), à savoir
(1b) réaliser un stockage de brochettes de kebab situées à l'intérieur ou sur le dispositif (1) selon l'une quelconque des revendications 1 à 8.

13. Procédé pour stocker des brochettes de kebab selon la revendication 12, **caractérisé en ce que** le stockage selon l'étape (1b) est effectuée dans une chambre froide, de préférence dans une chambre de congélation, de préférence à une température de ≤ -15 °C.

14. Procédé pour le transport des brochettes de kebab, comprenant au moins une étape (1c), à savoir
(1c) réaliser un transport de brochettes de kebab situées à l'intérieur ou sur le dispositif (1) selon l'une quelconque des revendications 1 à 8, en déplaçant manuellement le dispositif (1) d'une première position A à une deuxième position B.

15. Procédé pour le transport des brochettes de kebab selon la revendication 14, **caractérisé en ce que** le transport selon l'étape (1c) est effectué
(i) après la fabrication de la brochette de kebab, du lieu de fabrication en tant que position A, vers une chambre de refroidissement, de préférence une chambre de congélation, en tant que position B, ou **en ce que** le transport est effectué selon l'étape (1c),
(ii) après un refroidissement, de préférence après une congélation, de la brochette de kebab dans une chambre de refroidissement, de préférence dans une chambre de congélation, en tant que position A, vers un endroit à l'extérieur de la chambre de refroidissement, de préférence à l'extérieur de la chambre de congélation, en tant que position B.
